# EUROPEAN PATENT SPECIFICATION

(11) **EP 4 060 105 B1**
(45) Date of publication and mention of the grant of the patent: **07.02.2024**
(21) Application number: 22158978.1
(22) Date of filing: 25.02.2022
(51) Int. Cl.: C04B 11/00, E04D 5/02, D04H 1/60, C04B 28/26, C04B 28/34, C04B 111/00, E04D 11/02

(54) **WATERCURABLE NONWOVEN SHEET MATERIAL**
WASSERHÄRTBARES FASERVLIESSTOFFMATERIAL
MATÉRIAU NON TISSÉ DURCISSABLE À L'EAU

(30) Priority: 26.02.2021 NL 2027669
(43) Date of publication of application: 21.09.2022
(73) Proprietor: Allshield Holding B.V., 2913 LV Nieuwerkerk aan den Ijssel (NL)
(72) Inventor: LEENDERTSE, Krijn Dingenus Karel, 2913 LV Nieuwerkerk aan den IJssel (NL); DIJKHUIZEN, Robbert Alexander, 2913 LV Nieuwerkerk aan den IJssel (NL)
(74) Representative: V.O.

(56) References cited:
- EP-A1- 0 004 372
- EP-A1- 3 072 860
- EP-A1- 3 403 821
- EP-A2- 0 508 751
- WO-A1-01/00916
- WO-A1-90/12139
- WO-A1-2015/109408
- WO-A1-2020/114645
- WO-A2-2011/100288
- KR-B1- 101 649 208
- US-A- 837 717
- US-A- 5 039 454
- US-A1- 2002 098 336
- US-A1- 2007 130 864
- US-A1- 2018 186 697

## Description

The invention is directed to a water curable sheet material, to a roofing or cladding material comprising said water curable sheet material, to a method of preparing said water curable sheet material, to a method of curing said water curable sheet material, and to a roofing or cladding comprising a cured sheet.

The invention relates to a water curable sheet material that may broadly be used in construction, and has particular potential as roofing material, more in particular as roof coverings for relatively flat supporting roof structures or decks. Such roofs are broadly referred to in the art as flat roofs, and in prior art practice are generally topped with layers of roofing bonded together by suitable adhesives.

Such flat roofs at the same time provide large surface areas that can potentially be used for photovoltaic power generation. Since the demand for renewable and sustainable energy sources has strongly increased over the last decades, many flat rooftops are nowadays provided with photovoltaics. The existing extensive installations of photovoltaic installations on roofs coupled with the potential future growth would result in rooftop photovoltaic systems being commonplace in most buildings with flat roof constructions.

However, fire incidents occurring globally involving rooftop photovoltaic systems raise concerns regarding the impact of such systems on the inherent fire risks. These fire incidents not only emphasise the contribution of rooftop photovoltaic installations to building fire risks but also highlights the potential damage that could result from such fires.

The extent of damage on the building can be correlated to the extent of fire spread along the roof equipped with photovoltaic installations. Typically, in industrial buildings and logistic warehouses, roofs are constructed from materials with poor fire performance. Although they are good thermal insulators, they are easily ignitable and facilitate fire spread. Regulations have therefore been placed in certain countries to address this by focussing on the flammability characteristic of the roof and photovoltaic panels individually. However, the risks involving rooftop photovoltaic installations are not only limited to systems with unprotected or combustible roofing materials. Also incidents with typical "hard roofing" with sanded bitumen roof sheeting have been reported, even though these materials normally acts as protection against radiant heat and flying sparks. As a result, it is sometimes hard, or even impossible, to arrange for insurance of buildings with photovoltaics on rooftops.

Also in other construction applications, such as facades, floors, walls and roofs (including tunnel walls and roofs), roads, pipes, and the like, it can be desirable to have sheet materials that provide efficient flame retardancy and/or fire resistance and at the same time are easily processable.

US-A-837 717 discloses a process for making a fireproof and waterproof material in the form of a slab. The process involves intimately mixing of suitable proportions of dry pulverulent hydraulic cement and a suitable fibre, such as asbestos, then uniformly moistening the mixture to a limited extent and only sufficient to insure cohesion of the mass under pressure, and subsequently moulding the mass into the desired form in a moulding apparatus.

There remains a need in the art for sheeting material that can be used in various construction application, and exhibits high fire resistance, high flame retardancy, and/or ease of processing and application. Objective of the invention is to address this need in the art.

It was surprisingly found that this objective can be met, at least in part, by providing a sheet material with a nonwoven and specific inorganic particulate binder material.

Accordingly, in a first aspect the invention is directed to a water curable sheet material, comprising a nonwoven sheet and inorganic particulate binder material, wherein said inorganic particulate binder material comprises a combination of:
a) an alkaline magnesium compound and an acidic phosphate compound, and/or
b) a silica fume and an alkali metal silicate.

The water curable sheet material of the invention allows for an easily applicable material that can, subsequently, be cured with water. The sheet material can be easily manufactured, and layers of the sheet material may be applied on the relevant surface. For example, the sheet material may be applied on existing rooftops, or may be applied on rooftops together with layers of conventional roofing. The nonwoven sheet acts as a carrier material that allows for a proper distribution of the inorganic particulate binder material, and for ease of handling and transportation. The sheets of the invention can be easily rolled out on a rooftop or other surface for application. Advantageously, the nonwoven carrier also allows to apply the sheet material on non-horizontal surfaces, such as tunnel walls. Moreover, by using a nonwoven carrier, the inorganic particulate binder material, which is typically a dry powder of relatively small particle size, becomes easier to handle. It will, for example, be less prone to weather conditions on site, where dry powder may be easily blown away. Furthermore, while dry particulate solutions require environmentally unfriendly additives to prevent sagging, settling and/or rinsing out, such additives can be avoided in accordance with the invention, because the nonwoven sheet carrier holds the inorganic particulate material binder in place.

A large variety of possible fibre materials may be used for the nonwoven sheet. The nonwoven sheet may, for instance, comprise one or more selected from the group consisting of glass fibre, polyethylene fibre, polypropylene fibre, polyester fibre, polyamide fibre, hemp fibre, elephant grass fibre, basalt fibre, felt, wool, and ceramic fibre. Of these materials, inorganic fibre materials are preferred in terms of recyclability. If both the nonwoven and binder material are inorganic, and preferably mineral based, then such combination may be collected together at the end of the lifetime, or at any other time, for recycling and can be shredded together. Separation of the different materials is then not required. The nonwoven sheet may therefore in an embodiment comprise one or more selected from the group consisting of glass fibre, basalt fibre and ceramic fibre. On the other, hand organic fibre materials, in many cases yield nonwoven sheets that are less stiff and more flexible. Depending on the application where the sheet material is to be employed, it may therefore be preferred to use organic fibre materials in terms of processability. In an embodiment therefore the nonwoven sheet comprises one or more selected from the group consisting of glass fibre, polyethylene fibre, polypropylene fibre, polyester fibre, polyamide fibre, hemp fibre, elephant grass fibre, basalt fibre, felt, wool, and ceramic fibre. It is, however, also possible in accordance with the invention to use any combination of inorganic and organic fibres in the nonwoven sheet.

Suitably, the nonwoven is stable at a pH value of 10 or more, such as at a pH value of 10-14, or 11-13.

Optionally, and depending on the type of fibres used, an adhesive may be applied to the fibres in order to improve adhesion of inorganic particulate binder material to the fibres. Preferably, such adhesive is an environmentally friendly adhesive.

The nonwoven sheet can have a thickness of 0.5-5 mm, preferably 1-4 mm, such as 2-3 mm. Nonwoven sheets having thickness of more than 5 mm become difficult to handle. On the other hand, it is difficult to provide nonwoven sheets with a thickness of less than 0.5 mm with sufficient inorganic particulate binder material loading.

The nonwoven sheet can have a basis weight of 10 to 1500 g/m², such as from 25-1200 g/m², 50-1000 g/m², 75-500 g/m², or 100-400 g/m². It can have a density of 0.01-0.1 g/m², such as 0.015-0.08 g/m², 0.017-0.06 g/m², or 0.02-0.05 g/m².

The nonwoven sheet may be an air laid nonwoven, spunbonded nonwoven, a melt blown nonwoven, a spun laced nonwoven, or a combination thereof.

The inorganic particulate binder material comprises a combination of a) an alkaline magnesium compound and an acidic phosphate compound, and/or b) a silica fume and an alkali metal silicate. These combinations of materials provide the sheet material with exceptional fire resistance and/or flame retardancy properties. In addition, the inorganic particulate binder material, when cured with water, provides excellent structural and mechanical properties. Furthermore, these materials upon curing typically ensure good bonding of the sheet material to the underlying substrate. In many cases, there is no need for using an adhesive to fix the sheet material to the underlying substrate, such as a roofing.

Preferably, the inorganic particulate binder material has an average particle size in the range of 0.01-1000 µm, preferably 0.05-750 µm, such as 0.1-500 µm, or 0.1-400 µm, or 0.2-300 µm, or 0.5-200 µm, or 0.7-100 µm, 1-500 µm, 5-400 µm, 10-300 µm, 20-200 µm, or 30-100 µm. Such particle sizes may be determined by methods that are commonly known in the art, such as by microscopy. Finer particles have the advantage of increasing the surface area of exposure for the curing reaction.

The alkaline magnesium component can comprises one or more selected from the group consisting of magnesium oxide, magnesium hydroxide, magnesium carbonate, or a magnesium alcoholate. Magnesium hydroxide has a relatively high solubility in acid environment, which ensures a fast cure speed. Such fast cure speed is advantageous for typical applications of the invention. While fast cure speed is typically accompanied by lowering of mechanical strength, the sheet material of the invention is typically used as a covering that is applied over an existing structure that provides mechanical strength.

The acidic phosphate component can comprise a salt of phosphoric acid, such as an orthophosphate, a hydrogen phosphate or a dihydrogen phosphate. Suitable examples include ammonium phosphates, potassium phosphates, and sodium phosphates.

Preferably, the combination of the alkaline magnesium compound and the acidic phosphate compound comprises a combination of a1) magnesium oxide and/or magnesium hydroxide and a2) an ammonium and/or potassium phosphate, more preferably a combination of magnesium oxide and potassium phosphate. In an embodiment, 50 wt.% or more of the inorganic particulate binder material, such as 70 wt. or more, 80 wt.% or more, 90 wt.% or more, 95 wt.% or more, or 98 wt.% or more, consists of a combination of magnesium oxide and ammonium phosphate.

The weight ratio between the alkaline magnesium compound and the acidic phosphate compound can range from 1 : 3 to 3 : 1, such as from 1 : 2 to 2 : 1, or from 1 : 1.5 to 1.5 : 1. Typically, the molar ratio between the alkaline magnesium compound and the acidic phosphate compound can range from 1 : 1 to 6 : 1, such as from 1.5 : 1 to 5 : 1, or from 2 : 1 to 4 : 1. The weight ratio and molar ratio of these components can be used to tune the properties of the cured product. Typically, however, the alkaline magnesium compound is kept at a stoichiometric higher amount compared to the acidic phosphate compound. This has the advantage that the cured product is substantially free of residual acid.

Upon exposure to water, the alkaline magnesium component and the acidic phosphate component undergo an acid-base reaction to produce a cementitious product, also known as magnesium phosphate cement. The cured product may, for example, comprise one or more selected from the group consisting of MgNH₄PO₄·6H₂O (struvite), Mg₃(PO₄)₂·4H₂O, MgHPO₄·3H₂O (newberyite), MgNH₄PO₄·H₂O (dittmarite), Mg(NH₄)₂H₂(PO₄)₂·4H₂O (schertelite), (NH₄)₂Mg₃H₄(PO₄)₄·8H₂O (hannayite), NaNH₄HPO₄·4H₂O (stercorite), MgKPO₄·6H₂O (struvite-K), and Mg(OH)₂. Preferably, the cured product comprises one or more selected from the group consisting of MgNH₄PO₄·6H₂O (struvite), MgNH₄PO₄·H₂O (dittmarite), and Mg(NH₄)₂H₂(PO₄)₂·4H₂O (schertelite). More preferably, the cured product comprises MgNH₄PO₄·6H₂O (struvite).

Any type of silica fume (also referred to in the art as microsilica) may be employed. For the most part (such as 80 % by total weight, or 90 % by total weight) silica fume comprises amorphous silica. Preferably, the silica fume has a high surface area and low levels of impurity. The impurities generally have little impact on the mechanical properties, but have significant impact on the visual properties. Silica fume is a waste product from silicon production, e.g. production of photovoltaic silicon wafers, silicon computer chips, and any other process where a high purity silicon is required. An example of a commercially available silica fume is Elkem Microsilica^{®} 970D.

Silica fume is a light powder, visually comparable to dust with a relatively high specific surface area. The size of the surface area heavily impacts the curing time. Larger surface area results in a faster curing product. The silica fume can, for example, have a specific surface area of at 5-40 g/m², such as 10-35 g/m², 15-30 g/m², or 20-25 g/m². The average particle size of the silica fume (*i.e.* of the primary particles) may typically be 1 µm or less, preferably 0.5 µm or less. Preferably, 95 % or more of the silica fume particles have a particle size less than 0.5 µm. Silica fume typically has a density of 2.20-2.25 g/cm³.

As commonly known by the person skilled in the art, the term "silica fume" is intended to refer the particulate amorphous silica obtained by a process in which silica is reduced and the reduction product is oxidised in the vapour phase in air. The term also includes the same type of amorphous silica produced synthetically without reduction and re-oxidation. Most conveniently, the silica fume can be obtained from the off-gas of silicon metal or ferrosilicon produced in electric reduction furnaces.

Generally, the alkali metal silica may have the empirical formula *m* SiO₂·*n* M₂O, wherein M represents lithium, sodium, potassium, or ammonium, or a mixture thereof. The molar ratio between *m* and *n* may be 3.6 or less, such as 3.0 or less, 2.0 or less, 1.7 or less, or 1.2 or less. Higher *m* : *n* molar ratios may lead to incomplete activation of the components. The alkali metal silicate can, for example, comprise one or more selected from the group consisting of potassium silicate, sodium silicate, lithium silicate, sodium-lithium silicate.

The alkali metal silicate may be a waterglass, preferably a sodium or potassium waterglass. Lithium or ammonium waterglasses, or mixtures of the above may also be used.

Preferably, the combination of b1) silica fume and b2) an alkali metal silicate comprises a combination of silica fume and potassium silicate. In an embodiment, 50 wt.% or more of the inorganic particulate binder material, such as 70 wt.% or more, 80 wt.% or more, 90 wt.% or more, 95 wt.% or more, or 98 wt.% or more, consists of a combination of silica fume and potassium silicate.

The weight ratio between the silica fume and the alkali metal silicate can range from 1 : 2 to 10 : 1, such as from 1 : 1 to 6 : 1, from 1.5 : 1 to 5 : 1, or from 2 : 1 to 4 : 1. The weight ratio of these components can be used to tune the properties of the cured product.

Upon exposure to water, and under alkaline conditions, the amorphous silica fume will react with itself in a condensation polymerisation reaction with silanol groups to form a network between the silica fume particles. The alkali metal silicate improves the processability of the silica fume. Additionally, in the presence of alkali metal silicate, the amount of water required for forming the network is relatively low. The end product has low viscosity, desirable curing time and good mechanical properties.

Apart from components a) and b), the inorganic particulate binder material may optionally comprise further additives, such as one or more selected from fillers, retarders, surfactants, plasticisers, antisettling agents, rheology modifiers, suspending agents, and antifoaming agents.

Suitable fillers include wollastonite, talc, fly ash, kaolin clay, kaolinite, meta kaolin, mullite, calcium aluminate minerals, calcium silicate minerals, aluminium silicate minerals, calcium aluminium silicate minerals, limestone quartz sand, barite, perlite, diatomaceous earth, vermiculite, foamed sand, and combinations thereof.

Suitable retarders include alkali metal fluorides, alkali metal stannates, borax, and combinations thereof.

Suitable anionic surfactants include perfluorooctanoate, perfluorooctanesulphonate, sodium dodecyl sulphate, ammonium lauryl sulphate, alkyl sulphate salts, sodium lauryl ether sulphate, alkyl benzene sulphonate, and fatty acid salts. Suitable cationic surfactants include cetyl trimethylammonium bromide, alkyl trimethylammonium salt, cetylpyridinium chloride, polyethoxylated tallow amine, benzalkonium chloride, and benzethonium chloride. Suitable amphoteric surfactants include dodecyl betaine, cocamidopropyl betaine, and coco ampho glycinate. Suitable nonionic surfactants include alkyl poly(ethylene oxide), alkylphenol poly(ethylene oxide), poloxamers or poloxamines (copolymer of polyethylene oxide or polypropylene oxide), octyl glucoside, decyl maltoside, cetyl alcohol, oleyl alcohol, and dodecyl dimethylamine oxide.

Suitable plasticisers include phthalates, trimellitates, aliphatic dibasic esters, phosphates, epoxides, or polyesters.

Suitable antisettling agents include soy lecithin, aluminium stearate, stearate coated calcium carbonate, modifier castor oil or fatty acids, pine oil, methyl ethyl ketoxime, di-isobutylene maleic dispersion, ammonium polyacrylate, modified soy lecithin emulsion, polycaprolactonepolyol-polyethyleneimine block copolymer, polycaprolactonepolyol-toluenediisocyanate copolymer, polyhydroxystearic acid, and alkyd based antisettling agents.

Suitable rheology modifiers and suspending agents include hydrated magnesium aluminium silicate, lignosulphonates, salts of sulphonated naphthalene sulphonate condensates, salts of sulphonated melamine sulphonate condensates, beta naphthalene sulphonates, sulphonated melamine formaldehyde condensates, naphthalene sulphonate formaldehyde condensate resins, polyaspartates, oligomeric dispersants, polymethacrylate salts, guar gum, diutan gum, welan gum, and xanthan gum.

Suitable antifoaming agents include silicon-based antifoam oil, acetylene glycol surfactants, and polyoctyl acrylates.

The amount of the inorganic particulate binder material in the water curable sheet material of the invention may be in the range of 1-5 kg per m² of nonwoven sheet, such as 2-4 kg per m², or 3-4.5 kg per m². Amounts of more than 5 kg per m² of nonwoven sheet lead to relatively heavy sheets that may not be allowed for specific applications to due regulation, such as on rooftops. An amount of less than 1 kg per m² of nonwoven sheet may lead to insufficient fire resistance and/or flame retardancy.

In a further aspect, the invention is directed to a method of preparing a water curable sheet material, preferably a water curable sheet material according to the invention, which method comprises
- providing a nonwoven sheet,
- applying inorganic particulate binder material onto said nonwoven sheet, wherein said inorganic particulate binder comprises a combination of:
   a) an alkaline magnesium compound and an acidic phosphate compound, and/or
   b) a silica fume and an alkali metal silicate.

The inorganic particulate binder material may be applied onto the nonwoven sheet either during and/or after production of the nonwoven sheet. In order to achieve good distribution throughout the nonwoven, it is preferred to apply the inorganic particulate binder material during production of the nonwoven sheet. The inorganic particulate binder material may, for example, be spread over fibres that are used for preparing the nonwoven sheet. Preferably, the inorganic particulate binder material is spread over the fibres in powder form, *viz.* as a dry powder. Alternatively, or in addition, it is possible to spread the inorganic particulate binder material over the nonwoven after the production thereof. However, this will result in a material wherein the inorganic particulate binder material is distributed less homogeneous.

In yet a further aspect, the invention is directed to roofing material or cladding material comprising a water curable sheet material according to the invention. The roofing material may be based on any conventional type of roofing that is known in the art. The roofing material may, for instance, comprise one or more selected from the group consisting of bitumen, polymer modified bitumen, polyvinyl chloride, polychloroprene (also known as neoprene), ethylene propylene diene monomer (EPDM), chlorinated polyethylene, thermoplastic polyolefin, and chlorosulphonated polyethylene.

In yet a further aspect, the invention is directed to a method of curing the water curable sheet material according to the invention, comprising exposing said curable sheet material to water. The water can for instance simply be sprayed over the water curable sheet material. Of course, the person skilled in the art knows that the amount of water can be varied within a reasonable range to optimise the performance of the cured sheet material (setting time and strength).

The amount of water to be used for the curing is typically 10 % or more based on total dry weight of the inorganic particulate binder material, such as 15 % or more, or 20 % or more. The upper limit for the amount of water is less critical, but may generally be 50 % or less, based on total dry weight of the inorganic particulate binder material, such as 40 % or less, or 35 % or less. One generally tries to make the material as flowable as possible using the least amount of water.

Advantageously, the method of curing the water curable sheet material can be performed at room temperature and/or ambient conditions.

Curing the water curable sheet material in many cases at the same time fixates the sheet material to the underlying substrate, in particular when the underlying substrate is a mineral substrate. In case fixation is insufficient, which may be the case for some polymeric substrates, an additional adhesive may be employed between the underlying substrate and the sheet material.

In yet a further aspect, the invention is directed to roofing or cladding comprising a cured sheet prepared from a water curable sheet material according to the invention. Preferably, the cured sheet of the invention forms the exposed surface of the roof or cladding, *i.e.* the outermost layer.

A roof comprising the cured sheet of the invention is advantageously highly fire resistant. Tests with a roof having a cured sheet prepared from a glass fibre nonwoven with a combination of magnesium oxide and an ammonium phosphate have shown that fire classification B according to NEN-EN 13501-1 can easily be achieved.

A water curable sheet material as described herein and a cured sheet prepared from such a water curable sheet material may also be applied in one or more of a facade, a floor, a wall and a roof (including tunnel walls and roofs), a road, a pipe, and the like.

## Claims

1. Water curable sheet material, comprising a nonwoven sheet and inorganic particulate binder material, wherein said inorganic particulate binder material comprises a combination of:
a) an alkaline magnesium compound and an acidic phosphate compound, and/or
b) a silica fume and an alkali metal silicate.

2. Water curable sheet material according to claim 1, wherein said nonwoven sheet comprises one or more selected from the group consisting of glass fibre, polyethylene fibre, polypropylene fibre, polyester fibre, polyamide fibre, hemp fibre, elephant grass fibre, basalt fibre, felt, wool, and ceramic fibre.

3. Water curable sheet material according to claim 1 or 2, wherein said alkaline magnesium component comprises one or more selected from the group consisting of magnesium oxide, magnesium hydroxide, magnesium carbonate, or a magnesium alcoholate.

4. Water curable sheet material according to any one of claims 1-3, wherein said acidic phosphate component comprises a salt of phosphoric acid, such as an orthophosphate, a hydrogen phosphate or a dihydrogen phosphate.

5. Water curable sheet material according to any one of claims 1-4, wherein said alkali metal silicate comprises one or more selected from the group consisting of potassium silicate, sodium silicate and lithium silicate.

6. Water curable sheet material according to any one of claims 1-5, wherein said combination of an alkaline magnesium compound and an acidic phosphate compound comprises a combination of a1) magnesium oxide and/or magnesium hydroxide and a2) an ammonium phosphate and/or a potassium phosphate, preferably said combination of an alkaline magnesium compound and an acidic phosphate compound comprises a combination of magnesium oxide and an potassium phosphate.

7. Water curable sheet material according to any one of claims 1-6, wherein said combination of a silica fume and an alkali metal silicate comprises a combination of silica fume and potassium silicate.

8. Water curable sheet material according to any one of claims 1-7, wherein
- the molar ratio between the alkaline magnesium compound and the acidic phosphate compound can range from 1 : 1 to 6 : 1, such as from 1.5 : 1 to 5 : 1, or from 2 : 1 to 4 : 1; and/or
- the weight ratio between the silica fume and the alkali metal silicate can range from 1 : 2 to 10 : 1, such as from 1 : 1 to 6 : 1, from 1.5 : 1 to 5 : 1, or from 2 : 1 to 4 : 1.

9. Water curable sheet material according to any one of claims 1-8, wherein the silica fume has a specific surface area of 5-40 g/m², such as 10-35 g/m², 15-30 g/m², or 20-25 g/m².

10. Water curable sheet material according to any one of claims 1-9, wherein said nonwoven sheet has a thickness of 0.5-5 mm, preferably 1-4 mm, such as 2-3 mm.

11. Method of preparing a water curable sheet material, preferably according to any one of claims 1-10, said method comprising
- providing a nonwoven sheet,
- applying inorganic particulate binder material onto said nonwoven sheet, wherein said inorganic particulate binder material comprises a combination of:
a) an alkaline magnesium compound and an acidic phosphate compound, and/or
b) a silica fume and an alkali metal silicate.

12. Method according to claim 11, wherein said inorganic particulate binder material is
- applied onto said nonwoven sheet during or after production of said nonwoven sheet; and/or
- spread in powder form over fibres of the nonwoven sheet during production of the nonwoven sheet.

13. Roofing or cladding material comprising a water curable sheet material according to any one of claims 1-10, wherein said roofing or cladding material preferably comprises one or more selected from the group consisting of bitumen, polymer modified bitumen, polyvinyl chloride, polychloroprene, ethylene propylene diene monomer (EPDM), chlorinated polyethylene, thermoplastic polyolefin, and chlorosulphonated polyethylene.

14. Method of curing a water curable sheet material according to any one of claims 1-10, comprising exposing said curable sheet material to water, such as by spraying, wherein the amount of water used is preferably 10 % or more based on total dry weight of the inorganic particulate binder material, such as 15 % or more, or 20 % or more.

15. Roofing or cladding comprising a cured sheet prepared from a water curable sheet material according to any one of claims 1-10.

## Patentansprüche

1. Wasserhärtbares Bogenmaterial, umfassend einen nichtgewebten Bogen und anorganisches partikelförmiges Bindemittelmaterial, wobei das anorganische partikelförmige Bindemittelmaterial eine Kombination umfasst von:
a) einer alkalischen Magnesiumverbindung und einer sauren Phosphatverbindung, und/oder
b) einem Silicastaub und einem Alkalimetallsilikat.

2. Wasserhärtbares Bogenmaterial nach Anspruch 1, wobei der nichtgewebte Bogen eines oder mehrere umfasst, ausgewählt aus der Gruppe, bestehend aus Glasfaser, Polyethylenfaser, Polypropylenfaser, Polyesterfaser, Polyamidfaser, Hanffaser, Elefantengrasfaser, Basaltfaser, Filz, Wolle, und Keramikfaser.

3. Wasserhärtbares Bogenmaterial nach Anspruch 1 oder 2, wobei die alkalische Magnesiumverbindung eines oder mehrere umfasst, ausgewählt aus der Gruppe, bestehend aus Magnesiumoxid, Magnesiumhydroxid, Magnesiumcarbonat, oder einem Magnesiumalkoholat.

4. Wasserhärtbares Bogenmaterial nach einem der Ansprüche 1 - 3, wobei die saure Phosphatverbindung ein Salz von Phosphorsäure, umfasst, so wie ein Orthophosphat, ein Hydrogenphosphat oder ein Dihydrogenphosphat.

5. Wasserhärtbares Bogenmaterial nach einem der Ansprüche 1 - 4, wobei das Alkalimetallsilikat eines oder mehrere umfasst, ausgewählt aus der Gruppe, bestehend aus Kaliumsilikat, Natriumsilikat und Lithiumsilikat.

6. Wasserhärtbares Bogenmaterial nach einem der Ansprüche 1 - 5, wobei die Kombination aus einer alkalischen Magnesiumverbindung und einer sauren Phosphatverbindung eine Kombination aus a1) Magnesiumoxid und/oder Magnesiumhydroxid und a2) einem Ammoniumphosphat und/oder einem Kaliumphosphat umfasst, vorzugsweise die Kombination aus einer alkalischen Magnesiumverbindung und einer sauren Phosphatverbindung eine Kombination aus Magnesiumoxid und einem Kaliumphosphat umfasst.

7. Wasserhärtbares Bogenmaterial nach einem der Ansprüche 1 - 6, wobei die Kombination aus einem Silicastaub und einem Alkalimetallsilikat eine Kombination aus Silicastaub und Kaliumsilikat umfasst.

8. Wasserhärtbares Bogenmaterial nach einem der Ansprüche 1 - 7, wobei
- das molare Verhältnis zwischen der alkalischen Magnesiumverbindung und der sauren Phosphatverbindung im Bereich von 1 : 1 bis 6 : 1, so wie von 1,5 : 1 bis 5 : 1, oder von 2 : 1 bis 4 : 1 sein kann; und/oder
- das Gewichtsverhältnis zwischen dem Silikastaub und dem Alkalimetallsilikat im Bereich von 1 : 2 bis 10 : 1, so wie von 1 : 1 bis 6 : 1, von 1,5 : 1 bis 5 : 1, oder von 2 : 1 bis 4 : 1 sein kann.

9. Wasserhärtbares Bogenmaterial nach einem der Ansprüche 1 - 8, wobei der Silicastaub eine spezifische Oberfläche von 5 - 40 g/m², so wie 10 - 35 g/m², 15 - 30 g/m² oder 20 - 25 g/m² hat.

10. Wasserhärtbares Bogenmaterial nach einem der Ansprüche 1 - 9, wobei der nichtgewebte Bogen eine Dicke von 0,5 - 5 mm, vorzugsweise 1 - 4 mm, so wie 2 - 3 mm, hat.

11. Verfahren zum Herstellen eines wasserhärtbaren Bogenmaterials, vorzugsweise nach einem der Ansprüche 1 - 10, das Verfahren umfassend
- Bereitstellen eines nichtgewebten Bogens,
- Aufbringen anorganischen partikelförmigen Bindematerials auf den nichtgewebten Bogen,
wobei das anorganische partikelförmige Bindematerial eine Kombination umfasst von:
a) einer alkalischen Magnesiumverbindung und einer sauren Phosphatverbindung, und/oder
b) einem Silicastaub und einem Alkalimetallsilikat.

12. Verfahren nach Anspruch 11, wobei das anorganische partikelförmige Bindemittelmaterial
- auf den nichtgewebten Bogen während oder nach der Herstellung des nichtgewebten Bogens aufgebracht wird; und/oder
- in Pulverform über Fasern des nichtgewebten Bogens während der Herstellung des nichtgewebten Bogens verteilt wird.

13. Dachdeckungs- oder Verkleidungsmaterial, umfassend ein wasserhärtbares Bogenmaterial nach einem der Ansprüche 1 - 10, wobei das Dachdeckungs- oder Verkleidungsmaterial vorzugsweise eines oder mehrere umfasst, ausgewählt aus der Gruppe, bestehend aus Bitumen, polymermodifiziertem Bitumen, Polyvinylchlorid, Polychlorpren, Ethylen-Propylen-Dien-Monomer (EPDM), chloriertem Polyethylen, thermoplastischem Polyolefin, und chlorsulfoniertem Polyethylen besteht.

14. Verfahren zum Härten eines wasserhärtbaren Bogenmaterials nach einem der Ansprüche 1 - 10, umfassend Aussetzen des härtbaren Bogenmaterials gegenüber Wasser, so wie durch Sprühen, wobei die verwendete Wassermenge vorzugsweise 10% oder mehr, basierend auf Gesamttrockengewicht des anorganischen partikelförmigen Bindematerials, ist so wie 15% oder mehr, oder 20% oder mehr.

15. Dachdeckung oder Verkleidung, umfassend einen ausgehärteten Bogen, hergestellt aus einem wasserhärtbaren Bogenmaterial nach einem der Ansprüche 1 - 10.

## Revendications

1. Matériau en feuille durcissable à l'eau, comprenant une feuille non tissée et un matériau liant particulaire inorganique, dans lequel ledit matériau liant particulaire inorganique comprend une combinaison :
a) d'un composé de magnésium alcalin et d'un composé de phosphate acide, et/ou
b) d'une fumée de silice et d'un silicate de métal alcalin.

2. Matériau en feuille durcissable à l'eau selon la revendication 1, dans lequel ladite feuille non tissée comprend un ou plusieurs sélectionnés dans le groupe constitué de fibre de verre, de fibre de polyéthylène, de fibre de polypropylène, de fibre de polyester, de fibre de polyamide, de fibre de chanvre, de fibre d'herbe à éléphant, de fibre de basalte, de feutre, de laine et de fibre de céramique.

3. Matériau en feuille durcissable à l'eau selon la revendication 1 ou 2, dans lequel ledit composant de magnésium alcalin comprend un ou plusieurs sélectionnés dans le groupe constitué d'oxyde de magnésium, d'hydroxyde de magnésium, de carbonate de magnésium ou d'un alcoolate de magnésium.

4. Matériau en feuille durcissable à l'eau selon l'une quelconque des revendications 1 à 3, dans lequel ledit composant de phosphate acide comprend un sel d'acide phosphorique, tel qu'un orthophosphate, un hydrogénophosphate ou un dihydrogénophosphate.

5. Matériau en feuille durcissable à l'eau selon l'une quelconque des revendications 1 à 4, dans lequel ledit silicate de métal alcalin comprend un ou plusieurs sélectionnés dans le groupe constitué de silicate de potassium, de silicate de sodium et de silicate de lithium.

6. Matériau en feuille durcissable à l'eau selon l'une quelconque des revendications 1 à 5, dans lequel ladite combinaison d'un composé de magnésium alcalin et d'un composé de phosphate acide comprend une combinaison a1) d'oxyde de magnésium et/ou d'hydroxyde de magnésium et a2) d'un phosphate d'ammonium et/ou d'un phosphate de potassium, de préférence ladite combinaison d'un composé de magnésium alcalin et d'un composé de phosphate acide comprend une combinaison d'oxyde de magnésium et d'un phosphate de potassium.

7. Matériau en feuille durcissable à l'eau selon l'une quelconque des revendications 1 à 6, dans lequel ladite combinaison d'une fumée de silice et d'un silicate de métal alcalin comprend une combinaison de fumée de silice et de silicate de potassium.

8. Matériau en feuille durcissable à l'eau selon l'une quelconque des revendications 1 à 7, dans lequel
- le rapport molaire entre le composé de magnésium alcalin et le composé de phosphate acide peut aller de 1:1 à 6:1, tel que de 1,5:1 à 5:1, ou de 2:1 à 4:1 ; et/ou
- le rapport pondéral entre la fumée de silice et le silicate de métal alcalin peut aller de 1:2 à 10:1, tel que de 1:1 à 6:1, de 1,5:1 à 5:1, ou de 2:1 à 4:1.

9. Matériau en feuille durcissable à l'eau selon l'une quelconque des revendications 1 à 8, dans lequel la fumée de silice a une surface spécifique de 5 à 40 g/m², telle que de 10 à 35 g/m², de 15 à 30 g/m², ou de 20 à 25 g/m².

10. Matériau en feuille durcissable à l'eau selon l'une quelconque des revendications 1 à 9, dans lequel ladite feuille non tissée a une épaisseur de 0,5 à 5 mm, de préférence de 1 à 4 mm, telle que de 2 à 3 mm.

11. Méthode de préparation d'un matériau en feuille durcissable à l'eau, de préférence selon l'une quelconque des revendications 1 à 10, ladite méthode comprenant
- la fourniture d'une feuille non tissée,
- l'application d'un matériau liant particulaire inorganique sur ladite feuille non tissée, dans laquelle ledit matériau liant particulaire inorganique comprend une combinaison :
a) d'un composé de magnésium alcalin et d'un composé de phosphate acide, et/ou
b) d'une fumée de silice et d'un silicate de métal alcalin.

12. Méthode selon la revendication 11, dans laquelle ledit matériau liant particulaire inorganique est
- appliqué sur ladite feuille non tissée pendant ou après la production de ladite feuille non tissée ; et/ou
- étalé sous forme de poudre sur des fibres de la feuille non tissée pendant la production de la feuille non tissée.

13. Matériau de couverture ou de bardage comprenant un matériau en feuille durcissable à l'eau selon l'une quelconque des revendications 1 à 10, dans lequel ledit matériau de couverture ou de bardage comprend de préférence un ou plusieurs sélectionnés dans le groupe constitué de bitume, de bitume modifié par un polymère, de poly(chlorure de vinyle), de polychloroprène, d'un monomère éthylène-propylène-diène (EPDM), de polyéthylène chloré, de polyoléfine thermoplastique et de polyéthylène chlorosulfoné.

14. Méthode de durcissement d'un matériau en feuille durcissable à l'eau selon l'une quelconque des revendications 1 à 10, comprenant l'exposition dudit matériau en feuille durcissable à de l'eau, tel que par pulvérisation, dans laquelle la quantité d'eau utilisée est de préférence de 10 % ou plus sur la base du poids sec total du matériau liant particulaire inorganique, telle que de 15 % ou plus, ou de 20 % ou plus.

15. Couverture ou bardage comprenant une feuille durcie préparée à partir d'un matériau en feuille durcissable à l'eau selon l'une quelconque des revendications 1 à 10.
